# EUROPEAN PATENT APPLICATION

(11) **EP 4 660 148 A1**
(43) Date of publication of application: **10.12.2025**
(21) Application number: 25180321.9
(22) Date of filing: 03.06.2025
(51) Int. Cl.: C01G 53/506, H01M 4/36, H01M 4/525

(54) **HIGH-NICKEL COMPOUND AND PREPARATION METHOD THEREFOR**

(30) Priority: 04.06.2024 CN 202410715967
(71) Applicant: Guizhou Zhenhua E-CHEM Inc., Guiyang City, Guizhou Province 550014 (CN); Guizhou Zhenhua E-CHEM Co., Ltd, Guiyang City, Guizhou Province 550014 (CN); Guizhou Zhenhua Yilong E-CHEM Co., Ltd, Southwest Guizhou, Autonomous Prefecture 552401 (CN)
(72) Inventor: HUANG, Jin, Guiyang City, Guizhou Province, 550014 (CN); YU, Hu, Guiyang City, Guizhou Province, 550014 (CN); DENG, Shiyun, Guiyang City, Guizhou Province, 550014 (CN); YU, Ye, Giyang City, Guizhou Province, 550014 (CN); ZHOU, Chaoyi, Guiyang City, Guizhou Province, 550014 (CN); WANG, Lijuan, Guiyang City, Guizhou Province, 550014 (CN); LI, Lu, Guiyang City, Guizhou Province, 550014 (CN)
(74) Representative: Bardehle Pagenberg Partnerschaft mbB Patentanwälte Rechtsanwälte

(57) **Abstract**

Embodiments of the present application relate to a high-nickel compound and a preparation method therefor. According to one embodiment of the present application, the high-nickel compound has a chemical general formula of LiₐNiₓCo_{y}Mn_{z}M_{b}O₂·cα·dβ, where 1 ≤ a ≤ 1.2, 0 < b ≤ 0.01, 0 < c ≤ 0.01, 0 < d ≤ 0.02, 0.8 ≤ x ≤ 1, 0 ≤ y < 0.12, 0 ≤ z ≤ 0.2, and x + y + z = 1; M is a doping element; α is a first coating material, and β is a second coating material. Some other embodiments of the present application further provide a method for preparing a high-nickel compound. The high-nickel compound and the preparation method therefor provided by the embodiments of the present application can effectively solve the problems encountered in the traditional technology.

## Description

### TECHNICAL FIELD

The present invention relates to the field of lithium-ion batteries, and in particular, to a high-nickel compound and a preparation method therefor.

### BACKGROUND

At present, with the rapid development of the new energy market, the high-nickel lithium battery (the molar fraction of Ni is ≥ 0.6), as an environmentally friendly electricity storage material, has received increasing attention. The positive electrode material, as one of the most important components of a lithium battery, directly affects the performance of the battery, and the structural characteristics and the preparation process of the high-nickel compound used in the positive electrode material play a decisive role in the performance and the application of the lithium battery. For example, a relatively high cobalt content in raw materials used for preparing the high-nickel compound increases the cost of the raw materials, and the preparation process also has a certain influence on the crystal structure and performance (such as electrochemical performance) of the high-nickel compound, thereby affecting the aspects of the structural stability, rate capability, material storage, cycle performance, and the like of the positive electrode material.

Therefore, further improvements are needed in the existing high-nickel compounds and the preparation methods therefor.

### SUMMARY

An objective of the present application is to provide a high-nickel compound and a preparation method therefor, which are used to form a positive electrode material of a lithium battery.

One embodiment of the present application provides a high-nickel compound, which has a chemical general formula of LiₐNiₓCo_{y}Mn_{z}M_{b}O₂·cα·dβ, where 1 ≤ a ≤ 1.2, 0 < b ≤ 0.01, 0 < c ≤ 0.01, 0 < d ≤ 0.02, 0.8 ≤ x ≤ 1, 0 ≤ y < 0.12, 0 ≤ z ≤ 0.2, and x + y + z = 1; M is a doping element; α is a first coating material, and β is a second coating material.

Another embodiment of the present application further provides a positive electrode plate, which includes a positive electrode current collector and a positive electrode active substance, where the positive electrode active substance includes the high-nickel compound described above.

Still another embodiment of the present application further provides an electrode assembly, which includes: a negative electrode plate including a negative electrode current collector and a negative electrode active substance located on the negative electrode current collector; and the positive electrode plate described above.

A fourth embodiment of the present application further provides a battery, which includes the electrode assembly described above.

A fifth embodiment of the present application further provides an electric device, which includes the battery described above, where the battery is used for providing electric energy.

A sixth embodiment of the present application further provides a method for preparing a high-nickel compound, which includes:
(1) mixing a lithium source, a nickel-cobalt-manganese precursor, and an M source, and performing a first calcination treatment to prepare a first main material, where the M source is a compound containing an element M, and the first main material has a general formula of LiₐNiₓCo_{y}Mn_{z}M_{b}O₂, where 1 ≤ a ≤ 1.2, 0 < b ≤ 0.01, 0.8 ≤ x ≤ 1, 0 ≤ y < 0.12, 0 ≤ z ≤ 0.2, and x + y + z = 1;
(2) mixing the first main material and an A source, and performing a second calcination treatment to prepare a second main material, where the A source is a compound containing an element A; and
(3) mixing the second main material and a B source, and performing a third calcination treatment, where the B source is a compound containing an element boron. Compared with the prior art, the high-nickel compound and the preparation method therefor provided by the embodiments of the present application involve a low cobalt content, which can reduce the cost.

### BRIEF DESCRIPTION OF THE DRAWINGS

The drawings necessary for describing embodiments of the present application or the prior art will be briefly described below in order to describe the embodiments of the present application. It is apparent that the drawings in the following description are only some of the embodiments of the present application. Those skilled in the art may still derive drawings of other embodiments from the structures illustrated in these drawings without creative efforts.

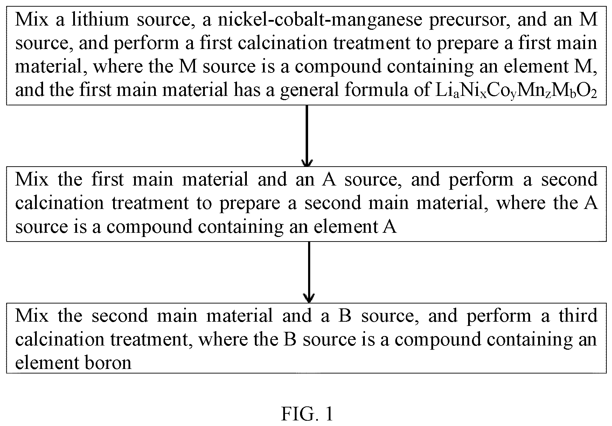

FIG. 1 is a schematic diagram of a method for preparing a high-nickel compound according to some embodiments of the present application.

### DETAILED DESCRIPTION

To better understand the spirit of embodiments of the present application, the following detailed description is provided for further description in conjunction with some preferred embodiments of the present application.

The embodiments of the present application will be described in detail below. Throughout the description of the present application, the term "about" as used herein is used to describe and illustrate minor variations. When used in conjunction with an event or circumstance, the term may refer to both an instance in which the event or circumstance occurs precisely as well as an instance in which the event or circumstance occurs in close approximation. For example, when used in conjunction with a numerical value, the term may refer to a range of variation of less than or equal to ± 10%, e.g., less than or equal to ± 5%, less than or equal to ± 4%, less than or equal to ± 3%, less than or equal to ± 2%, less than or equal to ± 1%, less than or equal to ± 0.5%, less than or equal to ± 0.1%, or less than or equal to ± 0.05%, of the stated numerical value. For example, two numerical values are "about" the same if the difference value between the two numerical values is less than or equal to ± 10% (e.g., less than or equal to ± 5%, less than or equal to ± 4%, less than or equal to ± 3%, less than or equal to ± 2%, less than or equal to ± 1%, less than or equal to ± 0.5%, less than or equal to ± 0.1%, or less than or equal to ± 0.05%) of the mean of the values.

In the description, amounts, ratios, and other numerical values are sometimes presented herein in range formats. It should be understood that such range formats are used for convenience and brevity, and should be flexibly interpreted to include not only the values explicitly specified as the limits of ranges, but also all the individual values or sub-ranges encompassed within the ranges as if each value and sub-range is explicitly specified.

In addition, for ease of description, the words "first", "second", and the like may be used herein to distinguish a substance or a series of substances, and these words may be interpreted as names.

The high-nickel compound proposed in the present application has a chemical general formula of LiₐNiₓCo_{y}Mn_{z}M_{b}O₂·cα·dβ, where: 1.00 ≤ a ≤ 1.20, 0.00 < b ≤ 0.01, 0.00 < c ≤ 0.01, 0.00 < d ≤ 0.02, 0.80 ≤ x < 1.00, 0.00 ≤ y < 0.12, 0.00 ≤ z < 0.2, and x + y + z = 1; M is a doping element; α is a first coating material, and β is a second coating material.

Due to a relatively low cobalt content in raw materials used, the high-nickel compound proposed in the present application greatly reduces the cost of the raw materials.

For a high-nickel positive electrode material with a molar fraction of nickel greater than about 0.6, e.g., a high-nickel positive electrode material with a molar fraction of nickel greater than about 0.8, the use of multiple coating processes may reduce residual alkali and reduce or even avoid the use of solvent washing and recovery processes. The doping element M is used for partially replacing the spatial positions of nickel, cobalt, and manganese, so as to stabilize the framework structure, inhibit the structural collapse, and stabilize the spatial structure during the charging and discharging processes. Meanwhile, due to a relatively large ionic radius, the doping element M may provide a larger lithium ion channel, so as to improve the material capacity. For example, M may be selected from one or more of elements of Group VB and Group VIB.

The first coating material α is used for shallow coating and is enriched on the surface of primary particles, such that the stress generated by the primary particles during the volume change process can be effectively released during the charging and discharging processes, and the stability of the primary particles is improved. For example, α may be selected from a compound containing one or more of elements of Group VB and Group VIB. For example, α is WO₃, MoO₃, or Nb₂O₅.

The second coating material β is used for surface coating, so as to prevent the positive electrode material from being in direct contact with the electrolytic solution, inhibit the side reaction between the positive electrode material and the electrolytic solution, and improve the safety performance. For example, β may be selected from one or more of boric acid, lithium borate, lithium metaborate, lithium tetraborate, and other boron-containing compounds, or a compound formed from one or more of boric acid, lithium borate, lithium metaborate, lithium tetraborate, and other boron-containing compounds. Illustratively, β may be Li₃BO₃, LiBO₂, or Li₂B₄O₇.

According to some embodiments of the present application, the high-nickel compound described above may have a specific surface area of about 0.1-1.5 m²/g and an average particle size of about 2-15 µm. For example, the high-nickel compound described above has an average particle size of about 5-15 µm, and may be a monocrystalline or polycrystalline compound. The high-nickel compound described above contains less than about 1500 ppm by mass of total free lithium.

According to some embodiments of the present application, in an X-ray diffraction pattern of the high-nickel compound described above, a ratio of FWHM (006)/FWHM (102) of a full width at half maximum FWHM (006) of a (006) diffraction peak near about 37.9° to a full width at half maximum FWHM (102) of a (102) diffraction peak near about 38.2° is about 1.05-1.15.

According to some embodiments of the present application, in an X-ray diffraction pattern of the high-nickel compound described above, a ratio of FWHM (108)/FWHM (110) of a full width at half maximum FWHM (108) of a (108) diffraction peak near about 64.3° to a full width at half maximum FWHM (110) of a (110) diffraction peak near about 64.7° is about 0.95-1.05.

According to some embodiments of the present application, the high-nickel compound described above may be used as a positive electrode material for a lithium-ion battery. For example, the high-nickel compound described above, conductive carbon black (S.P), and a binder (polyvinylidene fluoride (PVDF)) are added to *N-*methylpyrrolidone (NMP) in a weight ratio of 94:3:3 (the weight ratio of the high-nickel compound to NMP is 2.1:1). The mixture is uniformly mixed under stirring to form a uniform slurry to prepare a positive electrode material (or a positive electrode active substance). The slurry is applied to an aluminum foil current collector, dried, and compressed to obtain a positive electrode plate, which may constitute an electrode assembly with a negative electrode plate.

The present application further provides a battery, which may specifically be a lithium-ion battery, including the electrode assembly described above. The lithium-ion battery may be used in the fields of digital products, electric vehicles, or energy storage. For example, a lithium-ion secondary battery may generally be composed of an electrode assembly, a nonaqueous electrolyte, a separator, and a container. Specifically, the electrode assembly may include a positive electrode plate and a negative electrode plate, as described above. The positive electrode plate may be made from materials including a positive electrode current collector, a positive electrode active substance applied to the positive electrode current collector, a conventional binder, a conventional conductive additive, and the like. The positive electrode active substance may include the high-nickel compound described above proposed in the present application. The negative electrode may be made from materials including a current collector, a conventional negative electrode active substance applied to the current collector, a conventional binder, a conventional conductive additive, and the like. The separator is a PP/PE film conventionally used in the art, which serves to separate the positive electrode from the negative electrode. The container is an inclusion of the positive electrode, the negative electrode, the separator, and an electrolyte.

A 1 mol/L lithium hexafluorophosphate solution is used as an electrolytic solution, where a solvent in the lithium hexafluorophosphate solution is a mixed solvent with a mass ratio of dimethyl carbonate (DMC):ethylene carbonate (EC):diethyl carbonate (DEC) of 1:1:1. A mixture of artificial graphite, conductive carbon black, carboxymethyl cellulose, and an adhesive in a weight ratio of 95:1:1:3 is used as a negative electrode material. A mixture of the high-nickel compound described above, conductive carbon black, and PVDF in a weight ratio of 94:3:3 is used for preparing a positive electrode plate. Then, a battery cell with the model number of 454261 is prepared, and finally the battery is formed.

Some other embodiments of the present application further provide an electric device, which includes the battery described above. The battery described above is used for providing electric energy. The electric device may include a digital product, an electric vehicle, an energy storage apparatus, and the like. For example, the battery is used for portable electronic devices and electric automobiles, and may also be used for energy storage power systems such as hydroelectric power, thermal power, wind power, and solar power stations.

With the increasing attention of people to environmental protection, new energy is becoming more and more favored. As one of the power batteries used in new energy vehicles, the lithium-ion battery has a wide application prospect. Still other embodiments of the present application further provide a method for preparing the high-nickel compound described above, which includes the following steps:
(1) mixing a lithium source, a nickel-cobalt-manganese precursor, and an M source, and performing a first calcination treatment to prepare a first main material, where the M source is a compound containing an element M, and the first main material has a general formula of LiₐNiₓCo_{y}Mn_{z}M_{b}O₂, where 1 ≤ a ≤ 1.2, 0 < b ≤ 0.01, 0.8 ≤ x ≤ 1, 0 ≤ y < 0.12, 0 ≤ z ≤ 0.2, and x + y + z = 1;
(2) mixing the first main material and an A source, and performing a second calcination treatment to prepare a second main material, where the A source is a compound containing an element A; and
(3) mixing the second main material and a B source, and performing a third calcination treatment, where the B source is a compound containing an element boron.

The second main material may have a chemical general formula of LiₐNiₓCo_{y}Mn_{z}M_{b}O₂·cα, where α is a first coating material.

In general, the residual alkali of the high-nickel compound may be reduced by solvent washing. However, the method involves solvent recovery and environmental protection problems. In contrast, the present application proposes the use of multiple coating processes, which may minimize or even avoid the solvent recovery problem.

According to some embodiments of the present application, the lithium source may be selected from lithium hydroxide monohydrate. The M source is a compound containing an M element, and M may be selected from one or more of elements of Group VB and Group VIB. Illustratively, the M source may be tantalum oxide, niobium oxide, molybdenum oxide, or tungsten oxide.

According to some embodiments of the present application, the nickel-cobalt-manganese precursor is one or more of a hydroxide, a carboxyl oxide, or an oxide containing nickel, cobalt, and manganese elements, and may have a particle size of about 3-15 µm.

According to some embodiments of the present application, A may be selected from one or more of elements of Group VB and Group VIB. For example, the A source may be selected from one or more of tungsten oxide, molybdenum oxide, and niobium oxide.

According to some embodiments of the present application, the B source may be selected from one or more of boric acid, lithium borate, lithium metaborate, and lithium tetraborate.

According to some embodiments of the present application, a mass ratio of the first main material to the A source is about 1.0:(0.002-0.01), e.g., about 1:(0.003-0.007). A mass ratio of the second main material to the B source is 1:(0.002-0.01), e.g., about 1:(0.002-0.005).

According to some embodiments of the present application, in the preparation method described above, a temperature of the first calcination is about 700-900 °C, e.g., about 700-850 °C, and a time for the first calcination is about 8-30 h, e.g., about 20-24 h; a temperature of the second calcination is about 500-800 °C, e.g., about 700-800 °C, and a time for the second calcination is about 6-20 h, e.g., about 12-18 h; a temperature of the third calcination is about 250-450 °C, e.g., about 300-400 °C, and a time for the third calcination is about 3-15 h, e.g., about 6-10 h.

According to some embodiments of the present application, in the preparation method described above, a temperature of the first calcination is about 780 °C, 800 °C, or 840 °C, and a time for the first calcination is about 20 h or about 24 h; a temperature of the second calcination is about 700 °C, 740 °C, or 780 °C, and a time for the second calcination is about 10 h, 12 h, 16 h, or 18 h; a temperature of the third calcination is about 280 °C, 350 °C, 400 °C, or 450 °C, and a time for the third calcination is about 6 h or 8 h.

The method for preparing the high-nickel compound proposed in the present application is convenient for large-scale production. The residual alkali in the high-nickel compound may be significantly reduced by high-temperature calcination, and a solvent-free process may be used to reduce or avoid the environmental problem of solvent recovery. Moreover, combined with the second coating process, the capacity of the positive electrode material may be further improved. The temperature of the first calcination treatment is relatively high, which may play a role in stabilizing the structure and interface; the temperature of the second and third calcination treatments is relatively low, which may play a role in inhibiting the side reaction between the positive electrode material and the electrolytic solution. By reducing the loss of lithium metal, the capacity of the high-nickel compound may be significantly improved.

In general, for most of the positive electrode materials formed from the high-nickel compound, due to a relatively high content of residual alkali, solvent washing is used to wash away excessive residual alkali. However, solvent washing will cause the waste of lithium ions, such that more lithium salts need to be added during the batching process. The preparation method for the high-nickel compound proposed in the present application increases the number of calcination treatments, which can effectively reduce the residual alkali and repair the defects on the interface, such that solvent washing can be reduced or even avoided in the process design, and relatively less lithium salts can be added during the batching process. Combined with a specific crystal half-peak width ratio, this process can maximize the effect of lithium ions, such that the synthesized positive electrode material has a higher capacity and better gas generation performance.

The high-nickel compound proposed in the present application, and the preparation method therefor and use thereof will be described below with reference to specific examples. The reagents and devices not described in the present application are all contents that can be conventionally confirmed by those of ordinary skill in the art.

The reagents used in the examples below are shown in Table 1-1.

**Table 1-1. Information on reagents used in examples of the present application**

| Reagent | Grade | Model number | Manufacturer |
|---|---|---|---|
| Nickel-cobalt-manganese precursor | Ni: Co: Mn=83:07:10 | Particle size: 10 µm, and chemical formula: | Guangdong Jiana Energy Technology Co., Ltd. |
| | | Ni_{0.83}Co_{0.07}Mn_{0.1}(OH)₂ | |
| Nickel-cobalt-manganese precursor | Ni: Co: Mn=87:05:10 | Particle size: 10 µm, and chemical formula: | Guangdong Jiana Energy Technology Co., Ltd. |
| | | Ni_{0.87}Co_{0.05}Mn_{0.08}(OH)₂ | |
| Nickel-cobalt-manganese precursor | Ni: Co: Mn=92:5:3 | Particle size: 10 µm, and chemical formula: | Guangdong Jiana Energy Technology Co., Ltd. |
| | | Ni_{0.92}Co_{0.05}Mn_{0.03}(OH)₂ | |
| Nickel-cobalt-manganese precursor | Ni: Co: Mn=93:3:4 | Particle size: 10 µm, and chemical formula: | Guangdong Jiana Energy Technology Co., Ltd. |
| | | Ni_{0.93}Co_{0.03}Mn_{0.04}(OH)₂ | |
| Nano niobium oxide | Ceramic grade | --- | Xuancheng Jingrui New Materials, Co., Ltd., Anhui |
| Nano tantalum oxide | Ceramic grade | --- | Xuancheng Jingrui New Materials, Co., Ltd., Anhui |
| Nano molybdenum oxide | Ceramic grade | --- | Xuancheng Jingrui New Materials, Co., Ltd., Anhui |
| Nano tungsten oxide | Ceramic grade | --- | Xuancheng Jingrui New Materials, Co., Ltd., Anhui |
| Lithium hydroxide monohydrate | Battery grade | 99.5wt% | Jiangxi Ganfeng Lithium Co., Ltd. |
| Boric acid | Chemically pure | 99.5wt% | Aladdin |
| Lithium borate | Chemically pure | 99.5wt% | Aladdin |
| Lithium metaborate | Chemically pure | 99.5wt% | Aladdin |
| Lithium tetraborate | Chemically pure | 99.5wt% | Aladdin |
| Methyl Red | Chemically pure | 99.5wt% | Tianjin Guangfu Technology Development Co., Ltd. |
| Phenolphthalein | Chemically pure | 99.9wt% | Chengdu Jinshan Chemical Reagent Co., Ltd. |
| HCL | Chemically pure | 99.9wt% | Xilong Scientific Co., Ltd., Sichuan |
| High-purity oxygen | Industrial grade | Purity: 99.95% | Shenzhen Nanshan Gas Station |
| Conductive carbon black | Battery grade | Super P Li | TIMCAL Graphite & Carbon, Switzerland |
| *N-*methylpyrrolidone | Battery grade | Content: 99.5% | Nanjing Jinlong Chemical Factory, Jiangsu |
| Polyvinylidene fluoride | Battery grade | Solef 6020 | Solvay Chemicals, Inc., USA |
| Aluminum foil | Battery grade | Thickness: 16 µm | Aluminum Company of America |
| Electronic tape | Electronic grade | Green, width: 10 mm | Minnesota Mining and Manufacturing Company, USA |
| Lithium foil | Electronic grade | Diameter: Φ20 mm, and purity: ≥ 99.9% | Shanghai Shunyou Metal Material Co., Ltd. |
| Electrolytic solution | Electronic grade | Mixing solvent: dimethyl carbonate (DMC):ethylene carbonate (EC):diethyl carbonate (DEC) = 1: 1: 1 (mass ratio), and electrolyte: lithium hexafluorophosphate; concentration of lithium hexafluorophosphate in the electrolytic solution: 1 mol/L | Shenzhen Capchem Technology Co., Ltd. |
| Separator | ---- | Three-layer material of PP/PE/PP, Celgard M825, thickness: 16 µm. | Celgard, LLC, USA |
| Aluminum-plastic film | Industrial grade | Total thickness: 160 µm | Dai Nippon Printing Co., Ltd., Japan |

The devices and analytical methods used in the following examples were as follows: The crushing device was the SHQM dual-planetary ball mill from Lianyungang Chunlong Experimental Instrument Co., Ltd.; the air jet crushing device was the MX-50 air jet mill from Yixing Juneng Ultra Fine Grinding Equipment Co., Ltd.

In the present application, the specific surface area was detected and analyzed using a fully automated surface area and porosity analyzer (TriStar II 3020 from Micromeritics, USA).

The test method for free lithium in high-nickel compounds was as follows:
A proper amount of the sample, m grams (about 30 g), was accurately weighed (rounded to 0.01 g). The sample was put into a 250 mL conical flask, followed by a magnetic stirring bar, and 100 mL of deionized water was added. The conical flask was placed on a magnetic stirrer, and the stirrer was turned on to stir for 30 min. The mixed solution was filtered through filter paper and a funnel. 50 mL of the filtrate was pipetted using a 50 mL pipette, and put into a 100 mL beaker, followed by a magnetic stirring bar. The beaker was placed on a magnetic stirrer, and 2 drops of phenolphthalein indicator were added. The solution was titrated with a 0.05 mol/L hydrochloric acid standard titration solution until the color of the solution changed from red to colorless. The volume V1 of the 0.05 mol/L hydrochloric acid standard titration solution was recorded (endpoint 1). Then, 2 drops of methyl red indicator were added, and the color changed from colorless to yellow. The solution was titrated with the 0.05 mol/L hydrochloric acid standard titration solution until the color of the solution changed from yellow to orange. The beaker was placed on a heating furnace and heated until the solution boiled (the color of the solution changed from orange to yellow). The 100 mL beaker was removed and cooled to room temperature. The beaker was placed on the magnetic stirrer again. The solution was titrated with the 0.05 mol/L hydrochloric acid standard titration solution until the color of the solution changed from yellow to light red. The volume V2 of the 0.05 mol/L hydrochloric acid standard titration solution was recorded (endpoint 2). Lithium hydroxide: LiOH (wt%) = [V2 - 2 × (V2 - V1)] × 0.05 × 23.946 × 2 × 100/(m × 1000); lithium carbonate: Li₂CO₃ (wt%) = (V2 - V1) × 0.05 × 73.886 × 2 × 100/(m × 1000); free lithium: Li⁺ (wt%) = V2 × 0.05 × 6.94 × 2 × 100/(m × 1000).

Average particle size test: The test was performed using the MS3000 laser particle analyzer, with the procedures as follows:
A proper amount of sample was taken and added into a 100 mL beaker. First, the beaker was rinsed along the inner wall with a wash bottle, and then the sample adhered to the bottom of the beaker was rinsed with the wash bottle, with the amount of pure water added into the beaker controlled at 20-30 mL. The mixture was ultrasonicated for 5 min (stirring for 10 s before, during, and after the ultrasonication, with a stirring speed of about 2 r/s). 100 ± 10 mL of pure water was added into a sample injector of the MS3000 laser particle analyzer, and the rotation speed was adjusted to 3000 r/min before clicking on the start. The analyzer automatically performed optical alignment and background measurement, and then waited for the prompts for further operations. The ultrasonicated sample was transferred into a stirring tank, and then the beaker was rinsed with the wash bottle to ensure complete transfer of the sample. Once the sample was fully added, the software automatically began the measurement. After the measurement was complete, the data were automatically saved.

X-ray diffraction test: The test was performed using the pert PRU X-ray diffractometer from PANalytical in the Netherlands, with Cu- as a radiation source, and the diffraction angle being 10°-80°.

The method for preparing a battery (the battery cell model number: 454261) using the high-nickel compound prepared by the present application was as follows:
Preparation of a positive electrode plate: The high-nickel compound proposed in the present application, conductive carbon black (S.P), and a binder (polyvinylidene fluoride (PVDF)) were added to N-methylpyrrolidone (NMP) in a weight ratio of 94:3:3 (the weight ratio of the high-nickel compound to NMP was 2.1:1). The mixture was uniformly mixed under stirring to form a uniform slurry. The slurry was applied to an aluminum foil current collector, dried, and compressed to obtain an electrode plate.

Preparation of a negative electrode plate: Artificial graphite for a negative electrode, conductive carbon black (S.P), carboxymethyl cellulose (CMC), and an adhesive (SBR) were added to sufficient pure water in a weight ratio of 95:1:1:3. The mixture was mixed under stirring to form a uniform slurry. The slurry was applied to a copper foil current collector, dried, and compressed to obtain an electrode plate.

The separator is a PP/PE/PP three-layer composite film material.

The positive and negative electrode plates after compression were spot-welded with tabs. After inserting the separator, the electrode plates with the tabs were wound on a winding machine, and then loaded into a soft package fixture. The soft package fixture was sealed at the top and the sides, and then put into an oven for baking. Subsequently, 9 g of electrolytic solution was injected in an environment with a relative humidity of less than 1.5%. After the electrolytic solution injection, formation was performed for 48 h (LIP-3AHB06 high-constant-temperature formation system from Zhejiang HangKe Technology Inc.), and then vacuum sealing was performed.

The sample drying and the battery high-temperature test were performed using the KPBAK-03E-02 high-efficiency vacuum drying oven from Dongguan Kerui Machinery and Electronics Co., Ltd.

The charging and discharging test of the lithium-ion secondary battery prepared by the present application was performed on a battery tester from Wuhan Land Electronics Co., Ltd. (CT2001C test device, Wuhan Land Electronics Co., Ltd.) according to the test method of GB/T18287-2000. Different battery systems had a great influence on the cycle retention rate of the material. The battery system used in the experiment was the most common evaluation system. Specifically, a 1 mol/L lithium hexafluorophosphate solution was used as an electrolytic solution, where a solvent in the lithium hexafluorophosphate solution was a mixed solvent with a mass ratio of dimethyl carbonate (DMC):ethylene carbonate (EC):diethyl carbonate (DEC) of 1:1:1. A mixture of artificial graphite, conductive carbon black, carboxymethyl cellulose, and an adhesive in a weight ratio of 95:1:1:3 was used as a negative electrode material. The model number of the battery cell was 454261. In this way, actual defects of the positive electrode material were exposed as soon as possible, and the performance of the positive electrode material was determined.

### Example 1

Lithium hydroxide monohydrate, a precursor with a molar ratio of Ni:Co:Mn of 92:05:03 (chemical formula: Ni_{0.92}Co_{0.05}Mn_{0.03}(OH)₂), and a nano niobium pentoxide powder were added in a molar ratio of Li:(Ni + Co + Mn):Nb of 1.03:1:0.004. The mixture was ball-milled at a rotation speed of 40 HZ for 10 min to be uniformly mixed, and then discharged (namely, mixed material). The mixed material was put into a muffle furnace, heated to 780 °C at a heating rate of 5 °C/min, and then sintered for 24 h under oxygen atmosphere. The sintered material was cooled to room temperature, and then ball-milled for 10 min at a rotation speed of 40 HZ to obtain a first main material. Then, a corresponding amount of tungsten oxide was weighed and added to the first main material in a mass ratio of the first main material:tungsten oxide of 1.0:0.0028. The mixture was ball-milled at a rotation speed of 40 HZ for 10 min. The uniformly mixed material was put into the muffle furnace, heated to 700 °C at a heating rate of 10 °C/min, and then sintered for 18 h (second sintering) under oxygen atmosphere. The sintered material was cooled to room temperature. Then, the sample after the second sintering was crushed to obtain a second main material. Then, a corresponding amount of boric acid was weighed and added to the second main material in a mass ratio of the second main material:boric acid of 1.0:0.0025. The mixture was ball-milled at a rotation speed of 40 HZ for 10 min. The uniformly mixed material was put into the muffle furnace, heated to 350 °C at a heating rate of 5 °C/min, and then sintered for 6 h under air atmosphere. The sintered material was cooled to room temperature, and then sieved through a 300-mesh metal mesh to obtain high-nickel compound 1.

The particle size of high-nickel compound 1 was tested. The primary particles have an average particle size of 10.5 µm.

The specific surface area test, the X-ray diffraction test, and the cycle test were performed on high-nickel compound 1. The data are shown in Table 8.

The elemental composition analysis was performed on high-nickel compound 1. The test data are shown in Table 1. The finally obtained high-nickel compound has a chemical formula of Li_{1.03} Ni_{0.92}Co_{0.05}Mn_{0.03}Nb_{0.004}O₂•0.0012WO₃0.004 Li₃BO₃.

The test method for the element content was as follows:
0.2000 g of the sample (rounded to 0.0001 g) was accurately weighed and placed into a clean 100 mL glass beaker. 10 mL of aqua regia solution (1:1) was added into the beaker (a parallel blank group was set). The beaker was covered with a watch glass and heated on an electric heater until the solvent was nearly evaporated to dryness before stopping the heating. The beaker was then removed and cooled to room temperature. The watch glass and the side wall of the beaker were washed with deionized water at least three times. The solution was transferred into a 50 mL volumetric flask and diluted with deionized water to the mark. The mixture was uniformly mixed by shaking. 1 mL of the sample was transferred into a 100 mL volumetric flask and diluted to the mark. The mixture was uniformly mixed by shaking. The solution described above was tested on the inductively coupled plasma emission spectrometer (Thermo Fisher Scientific Co., Ltd., USA/icap7400) with reference to YS/T 1006.2-2014, Part I.

**Table 1. Test results of elemental mass content of high-nickel compound 1**

| Element | Li | Ni | Co | Mn | Nb | W | B |
|---|---|---|---|---|---|---|---|
| % | 7.2532 | 54.8892 | 2.9952 | 1.6753 | 0.3777 | 0.2242 | 0.0439 |

### Example 2

Lithium hydroxide monohydrate, a precursor with a molar ratio of Ni:Co:Mn of 93:03:04 (chemical formula: Ni_{0.93}Co_{0.03}Mn_{0.04}(OH)₂), and a nano tantalum oxide powder were added in a molar ratio of Li:(Ni + Co + Mn):Ta of 1.10:1:0.003. The mixture was ball-milled at a rotation speed of 40 HZ for 10 min to be uniformly mixed, and then discharged (namely, mixed material). The mixed material was put into a muffle furnace, heated to 800 °C at a heating rate of 5 °C/min, and then sintered for 20 h under oxygen atmosphere. The sintered material was cooled to room temperature, ball-milled for 10 min at a rotation speed of 40 HZ, and then jet-milled to obtain a first main material. Then, a corresponding amount of molybdenum oxide was weighed and added to the first main material in a mass ratio of the first main material:molybdenum oxide of 1.0:0.003. The mixture was ball-milled at a rotation speed of 40 HZ for 10 min. The uniformly mixed material was put into the muffle furnace, heated to 700 °C at a heating rate of 10 °C/min, and then sintered for 12 h (second sintering) under oxygen atmosphere. The sintered material was cooled to room temperature. Then, the sample after the second sintering was crushed to obtain a second main material. Then, a corresponding amount of lithium borate was weighed and added to the second main material in a mass ratio of the second main material:lithium borate of 1.0:0.005. The mixture was ball-milled at a rotation speed of 40 HZ for 10 min. The uniformly mixed material was put into the muffle furnace, heated to 450 °C at a heating rate of 5 °C/min, and then sintered for 8 h under air atmosphere. The sintered material was cooled to room temperature, and then sieved through a 300-mesh metal mesh to obtain high-nickel compound 2.

The particle size of high-nickel compound 2 was tested. The primary particles have an average particle size of 3.8 µm.

The specific surface area test, the X-ray diffraction test, and the cycle test were performed on high-nickel compound 2. The data are shown in Table 8.

The elemental composition analysis was performed on high-nickel compound 2. The test data are shown in Table 2. The finally obtained high-nickel compound has a chemical formula of Li_{1.10}Ni_{0.93}Co_{0.03}Mn_{0.04}Ta_{0.003}O₂•0.002MoO₃0.008 Li₃BO₃.

The test method for the element content was as follows:
0.2000 g of the sample (rounded to 0.0001 g) was accurately weighed and placed into a clean 100 mL glass beaker. 10 mL of aqua regia solution (1:1) was added into the beaker (a parallel blank group was set). The beaker was covered with a watch glass and heated on an electric heater until the solvent was nearly evaporated to dryness before stopping the heating. The beaker was then removed and cooled to room temperature. The watch glass and the side wall of the beaker were washed with deionized water at least three times. The solution was transferred into a 50 mL volumetric flask and diluted with deionized water to the mark. The mixture was uniformly mixed by shaking. 1 mL of the sample was transferred into a 100 mL volumetric flask and diluted to the mark. The mixture was uniformly mixed by shaking. The solution described above was tested on the inductively coupled plasma emission spectrometer (Thermo Fisher Scientific Co., Ltd., USA/icap7400) with reference to YS/T 1006.2-2014, Part I.

**Table 2. Test results of elemental mass content of high-nickel compound 2**

| Element | Li | Ni | Co | Mn | Ta | Mo | B |
|---|---|---|---|---|---|---|---|
| % | 7.6944 | 55.1332 | 1.7857 | 2.2195 | 0.5481 | 0.1938 | 0.0873 |

### Example 3

Lithium hydroxide monohydrate, a precursor with a molar ratio of Ni:Co:Mn of 83:07:10 (chemical formula: Ni_{0.83}Co_{0.07}Mn_{0.10}(OH)₂), and a nano tungsten oxide powder were added in a molar ratio of Li:(Ni + Co + Mn):W of 1.2:1:0.002. The mixture was ball-milled at a rotation speed of 40 HZ for 10 min to be uniformly mixed, and then discharged (namely, mixed material). The mixed material was put into a muffle furnace, heated to 840 °C at a heating rate of 5 °C/min, and then sintered for 24 h under oxygen atmosphere. The sintered material was cooled to room temperature, ball-milled for 10 min at a rotation speed of 40 HZ, and then jet-milled to obtain a first main material. Then, a corresponding amount of niobium oxide was weighed and added to the first main material in a mass ratio of the first main material:niobium oxide of 1.0:0.0067. The mixture was ball-milled at a rotation speed of 40 HZ for 10 min. The uniformly mixed material was put into the muffle furnace, heated to 780 °C at a heating rate of 10 °C/min, and then sintered for 18 h (second sintering) under oxygen atmosphere. The sintered material was cooled to room temperature. Then, the sample after the second sintering was crushed to obtain a second main material. Then, a corresponding amount of lithium metaborate was weighed and added to the second main material in a mass ratio of the second main material:lithium metaborate of 1.0:0.004. The mixture was ball-milled at a rotation speed of 40 HZ for 10 min. The uniformly mixed material was put into the muffle furnace, heated to 400 °C at a heating rate of 5 °C/min, and then sintered for 8 h under air atmosphere. The sintered material was cooled to room temperature, and then sieved through a 300-mesh metal mesh to obtain high-nickel compound 3.

The particle size of high-nickel compound 3 was tested. The primary particles have an average particle size of 4.2 µm.

The specific surface area test, the X-ray diffraction test, and the cycle test were performed on high-nickel compound 3. The data are shown in Table 8.

The elemental composition analysis was performed on high-nickel compound 3. The test data are shown in Table 3. The finally obtained high-nickel compound has a chemical formula of Li_{1.2}Ni_{0.83}Co_{0.07}Mn_{0.10}W_{0.002}O₂•0.0025Nb₂O₅0.008 LiBO₂.

The test method for the element content was as follows:

0.2000 g of the sample (rounded to 0.0001 g) was accurately weighed and placed into a clean 100 mL glass beaker. 10 mL of aqua regia solution (1:1) was added into the beaker (a parallel blank group was set). The beaker was covered with a watch glass and heated on an electric heater until the solvent was nearly evaporated to dryness before stopping the heating. The beaker was then removed and cooled to room temperature.

The watch glass and the side wall of the beaker were washed with deionized water at least three times. The solution was transferred into a 50 mL volumetric flask and diluted with deionized water to the mark. The mixture was uniformly mixed by shaking. 1 mL of the sample was transferred into a 100 mL volumetric flask and diluted to the mark. The mixture was uniformly mixed by shaking. The solution described above was tested on the inductively coupled plasma emission spectrometer (Thermo Fisher Scientific Co., Ltd., USA/icap7400) with reference to YS/T 1006.2-2014, Part I.

**Table 3. Test results of elemental mass content of high-nickel compound 3**

| Element | Li | Ni | Co | Mn | W | Nb | B |
|---|---|---|---|---|---|---|---|
| % | 8.2578 | 48.9203 | 4.1426 | 5.5169 | 0.3691 | 0.4665 | 0.0868 |

### Example 4

Lithium hydroxide monohydrate, a precursor with a molar ratio of Ni:Co:Mn of 83:07:10 (chemical formula: Ni_{0.83}Co_{0.07}Mn_{0.1}(OH)₂), and a nano molybdenum oxide powder were added in a molar ratio of Li:(Ni + Co + Mn):Mo of 1.06:1:0.003. The mixture was ball-milled at a rotation speed of 40 HZ for 10 min to be uniformly mixed, and then discharged (namely, mixed material). The mixed material was put into a muffle furnace, heated to 800 °C at a heating rate of 5 °C/min, and then sintered for 24 h under oxygen atmosphere. The sintered material was cooled to room temperature, and then ball-milled for 10 min at a rotation speed of 40 HZ to obtain a first main material. Then, a corresponding amount of tungsten oxide was weighed and added to the first main material in a mass ratio of the first main material:tungsten oxide of 1.0:0.0047. The mixture was ball-milled at a rotation speed of 40 HZ for 10 min. The uniformly mixed material was put into the muffle furnace, heated to 740 °C at a heating rate of 10 °C/min, and then sintered for 18 h (second sintering) under oxygen atmosphere. The sintered material was cooled to room temperature. Then, the sample after the second sintering was crushed to obtain a second main material. Then, a corresponding amount of lithium tetraborate was weighed and added to the second main material in a mass ratio of the second main material:lithium tetraborate of 1.0:0.0043. The mixture was ball-milled at a rotation speed of 40 HZ for 10 min. The uniformly mixed material was put into the muffle furnace, heated to 280 °C at a heating rate of 5 °C/min, and then sintered for 8 h under air atmosphere. The sintered material was cooled to room temperature, and then sieved through a 300-mesh metal mesh to obtain high-nickel compound 4.

The particle size of high-nickel compound 4 was tested. The primary particles have an average particle size of 10.5 µm.

The specific surface area test, the X-ray diffraction test, and the cycle test were performed on high-nickel compound 4. The data are shown in Table 8.

The elemental composition analysis was performed on high-nickel compound 4. The test data are shown in Table 4. The finally obtained high-nickel compound has a chemical formula of Li_{1.08}Ni_{0.83}Co_{0.07}Mn_{0.10}Mo_{0.003}O₂•0.002WO₃0.0025 Li₂B₄O₇.

**Table 4. Test results of elemental mass content of high-nickel compound 4**

| Element | Li | Ni | Co | Mn | Mo | W | B |
|---|---|---|---|---|---|---|---|
| % | 7.4456 | 49.4106 | 4.1841 | 5.5721 | 0.2919 | 0.3728 | 0.1094 |

### Example 5

Lithium hydroxide monohydrate, a precursor with a molar ratio of Ni:Co:Mn of 87:05:08 (chemical formula: Ni_{0.87}Co_{0.05}Mn_{0.08}(OH)₂), and a nano niobium oxide powder were added in a molar ratio of Li:(Ni + Co + Mn):Nb of 1.1:1:0.001. The mixture was ball-milled at a rotation speed of 40 HZ for 10 min to be uniformly mixed, and then discharged (namely, mixed material). The mixed material was put into a muffle furnace, heated to 780 °C at a heating rate of 5 °C/min, and then sintered for 20 h under oxygen atmosphere. The sintered material was cooled to room temperature, and then ball-milled for 10 min at a rotation speed of 40 HZ to obtain a first main material. Then, a corresponding amount of tungsten oxide was weighed and added to the first main material in a mass ratio of the first main material:tungsten oxide of 1.0:0.0047. The mixture was ball-milled at a rotation speed of 40 HZ for 10 min. The uniformly mixed material was put into the muffle furnace, heated to 700 °C at a heating rate of 10 °C/min, and then sintered for 16 h (second sintering) under oxygen atmosphere. The sintered material was cooled to room temperature. Then, the sample after the second sintering was crushed to obtain a second main material for the positive electrode material. Then, a corresponding amount of boric acid was weighed and added to the second main material in a mass ratio of the second main material:boric acid of 1.0:0.0048. The mixture was ball-milled at a rotation speed of 40 HZ for 10 min. The uniformly mixed material was put into the muffle furnace, heated to 350 °C at a heating rate of 5 °C/min, and then sintered for 6 h under air atmosphere. The sintered material was cooled to room temperature, and then sieved through a 300-mesh metal mesh to obtain high-nickel compound 5.

The particle size of high-nickel compound 5 was tested. The primary particles have an average particle size of 11.2 µm.

The specific surface area test, the X-ray diffraction test, and the cycle test were performed on high-nickel compound 5. The data are shown in Table 8.

The elemental composition analysis was performed on high-nickel compound 5. The test data are shown in Table 5. The finally obtained compound has a chemical formula of Li_{1.1}Ni_{0.87}Co_{0.05}Mn_{0.08}Nb_{0.001}O₂•0.002WO₃0.006 Li₃BO₃.

**Table 5. Test results of elemental mass content of high-nickel compound 5**

| Element | Li | Ni | Co | Mn | Nb | W | B |
|---|---|---|---|---|---|---|---|
| % | 7.6837 | 51.8073 | 2.9895 | 4.4591 | 0.0942 | 0.3729 | 0.0658 |

### Comparative Example 1

Lithium hydroxide monohydrate, a precursor with a molar ratio of Ni:Co:Mn of 83:07:10 (chemical formula: Ni_{0.83}Co_{0.07}Mn_{0.1}(OH)₂), and a nano niobium oxide powder were added in a molar ratio of Li:(Ni + Co + Mn):Nb of 1.12:1:0.002. The mixture was ball-milled at a rotation speed of 40 HZ for 10 min to be uniformly mixed, and then discharged (namely, mixed material). The mixed material was put into a muffle furnace, heated to 860 °C at a heating rate of 5 °C/min, and then sintered for 24 h under oxygen atmosphere. The sintered material was cooled to room temperature, ball-milled for 10 min at a rotation speed of 40 HZ, and then jet-milled to obtain a first main material. Then, water and the first main material were sequentially added in a mass ratio of water:the first main material: tungsten oxide of 1.5:1.0:0.007. The mixture was mixed under stirring for 10 min, and then tungsten oxide was added. The mixture was stirred for 10 min, filtered under vacuum, and dried at 120 °C. The dried sample was heated to 780 °C at a heating rate of 10 °C/min, and then sintered for 10 h (second sintering) under oxygen atmosphere. The sintered sample was cooled to room temperature. Then, the sample after the second sintering was crushed, and sieved through a 300-mesh metal mesh to obtain high-nickel compound D1.

The particle size of high-nickel compound D1 was tested. The primary particles have an average particle size of 3.4 µm.

The specific surface area test, the X-ray diffraction test, and the cycle test were performed on high-nickel compound D1. The data are shown in Table 8.

The elemental composition analysis was performed on high-nickel compound D1. The test data are shown in Table 6. The finally obtained positive electrode material has a chemical formula of Li_{1.12}Ni_{0.83}Co_{0.07}Mn_{0.10}Nb_{0.002}O₂•0.003WO₃.

**Table 6. Test results of elemental mass content of high-nickel compound D1**

| Element | Li | Ni | Co | Mn | Nb | W |
|---|---|---|---|---|---|---|
| % | 7.7428 | 49.2849 | 4.1735 | 5.5582 | 0.1879 | 0.5578 |

### Comparative Example 2

Lithium hydroxide monohydrate, a precursor with a molar ratio of Ni:Co:Mn of 83:07:10 (chemical formula: Ni_{0.83}Co_{0.07}Mn_{0.1}(OH)₂), and a nano tungsten oxide powder were added in a molar ratio of Li:(Ni + Co + Mn):W of 1.06:1:0.001. The mixture was ball-milled at a rotation speed of 40 HZ for 10 min to be uniformly mixed, and then discharged (namely, mixed material). The mixed material was put into a muffle furnace, heated to 780 °C at a heating rate of 5 °C/min, and then sintered for 24 h under oxygen atmosphere. The sintered material was cooled to room temperature, and then ball-milled for 10 min at a rotation speed of 40 HZ to obtain a first main material. Then, a corresponding amount of boric acid was weighed and added to the first main material in a mass ratio of the first main material:boric acid of 1.0:0.0043. The mixture was ball-milled at a rotation speed of 40 HZ for 10 min. The uniformly mixed material was put into the muffle furnace, heated to 320 °C at a heating rate of 5 °C/min, and then sintered for 8 h under air atmosphere. The sintered material was cooled to room temperature, and then sieved through a 300-mesh metal mesh to obtain high-nickel compound D2.

The particle size of high-nickel compound D2 was tested. The primary particles have an average particle size of 9.6 µm.

The specific surface area test, the X-ray diffraction test, and the cycle test were performed on high-nickel compound D2. The data are shown in Table 8.

The elemental composition analysis was performed on high-nickel compound D2. The test data are shown in Table 7. The finally obtained positive electrode material has a chemical formula of Li_{1.06}Ni_{0.83}Co_{0.07}Mn_{0.10}W_{0.001}O₂•0.0025 Li₂B₄O₇.

**Table 7. Test results of elemental mass content of high-nickel compound D2**

| Element | Li | Ni | Co | Mn | W | B |
|---|---|---|---|---|---|---|
| % | 7.453 | 49.7184 | 4.2102 | 5.6069 | 0.1875 | 0.1103 |

**Table 8. Characterization of high-nickel compounds obtained in examples**

| High-nickel compound | Specific surface area (m²/g) | Particle size | Free lithium | X-ray diffraction | | Capacity (mAh/g) | Capacity retention rate (%) | Thickness (%) |
|---|---|---|---|---|---|---|---|---|
| | | D50 (µm) | Total free lithium (ppm) | FWHM(006)/ FWHM(102) | FWHM(108)/ FWHM(110) | 4.2V 1C | 4.2 V 45 °C @ 300 cycles | 4.25 V 70 °C 30 days |
| 1 | 0.36 | 10.5 | 0.1278 | 1.082 | 1.044 | 204.4 | 88.4 | 16 |
| 2 | 0.75 | 3.8 | 0.0846 | 1.061 | 0.982 | 206.2 | 87.2 | 18 |
| 3 | 0.68 | 4.2 | 0.0997 | 1.120 | 1.971 | 199.4 | 94.3 | 12 |
| 4 | 0.32 | 10.5 | 0.1325 | 1.094 | 0.952 | 198.1 | 93.3 | 11 |
| 5 | 0.28 | 11.2 | 0.1124 | 1.068 | 1.012 | 202.8 | 92.8 | 14 |
| D1 | 0.82 | 3.4 | 0.1071 | 0.840 | 0.857 | 191.5 | 92.0 | 65 |
| D2 | 0.36 | 9.6 | 0.1432 | 0.892 | 0.898 | 193.2 | 74.2 | 43 |

As shown in Table 8, the high-nickel compounds obtained by the previous examples of the present application have less than 1500 ppm of total free lithium, a specific surface area of 0.3-0.9 m²/g, a particle size of 3.0-12 µm, an FWHM(006)/FWHM(102) ratio of 1.05-1.15, and an FWHM(108)/FWHM(110) ratio of 0.95-1.05. These high-nickel compounds have stable structures and interfaces, and are relatively stable in the air.

It can be seen from Table 8 that in the examples, when the molar fraction of Ni is 0.83, the capacity of the positive electrode material is 198.1 mAh/g, while the capacity of the positive electrode material prepared by the conventional water washing process (Comparative Example 1) is only 191.5 mAh/g. Moreover, the cycle performance of the positive electrode materials in both cases is basically the same, but the gas generation performance of the former is significantly better. When the molar fraction of nickel is greater than 0.9, the capacity can reach 206.2 mAh/g, which provides a basis for the subsequent application of high-nickel compound products. In addition, the high-nickel compound and the preparation process therefor proposed in the present application enable the gas generation performance of the positive electrode material to be better than that of the materials prepared by the existing processes.

While the technical content and technical features of the present application have been disclosed above, those skilled in the art can still make various substitutions and modifications without departing from the spirit of the present application based on the teaching and disclosure of the present application. Therefore, the scope of protection of the present application should not be limited to the content disclosed in the examples, but includes various alternatives and modifications without departing from the present application and encompassed by the claims of the present application.

## Claims

1. A high-nickel compound, having a chemical general formula of LiₐNiₓCo_{y}Mn_{z}M_{b}O₂·cα·dβ, wherein 1.03 ≤ a ≤ 1.2, 0.001 ≤ b ≤ 0.004, 0.0012 ≤ c ≤ 0.003, 0.0025 ≤ d ≤ 0.008, 0.8 ≤ x ≤ 1, 0 ≤ y < 0.12, 0 ≤ z ≤ 0.2, and x + y + z = 1; M is a doping element; α is a first coating material, and β is a second coating material; M is selected from one or more of elements of Group VB and Group VIB; α is selected from a compound containing one or more of elements of Group VB and Group VIB; β is selected from one or more of boric acid, lithium borate, lithium metaborate, lithium tetraborate, and other boron-containing compounds, or β is formed from one or more of boric acid, lithium borate, lithium metaborate, lithium tetraborate, and other boron-containing compounds.

2. The high-nickel compound according to claim 1, wherein the high-nickel compound contains less than 1500 ppm of total free lithium.

3. The high-nickel compound according to claim 1, wherein the high-nickel compound has a specific surface area of 0.1-1.5 m²/g and an average particle size of 2-15 µm.

4. The high-nickel compound according to claim 1, wherein in an X-ray diffraction pattern of the high-nickel compound, a ratio of FWHM (006)/FWHM (102) of a full width at half maximum FWHM (006) of a (006) diffraction peak near 37.9° to a full width at half maximum FWHM (102) of a (102) diffraction peak near 38.2° is 1.05-1.15.

5. The high-nickel compound according to claim 1, wherein in an X-ray diffraction pattern of the high-nickel compound, a ratio of FWHM (108)/FWHM (110) of a full width at half maximum FWHM (108) of a (108) diffraction peak near 64.3° to a full width at half maximum FWHM (110) of a (110) diffraction peak near 64.7° is 0.95-1.05.

6. A positive electrode plate, comprising a positive electrode current collector and a positive electrode active substance, wherein the positive electrode active substance comprises the high-nickel compound according to any one of claims 1-5.

7. An electrode assembly, comprising: a negative electrode plate comprising a negative electrode current collector and a negative electrode active substance located on the negative electrode current collector; and the positive electrode plate according to claim 6.

8. A battery, comprising the electrode assembly according to claim 7.

9. An electric device, comprising the battery according to claim 8, wherein the battery is used for providing electric energy.

10. A method for preparing a high-nickel compound comprising:
(1) mixing a lithium source, a nickel-cobalt-manganese precursor, and an M source, and performing a first calcination treatment to prepare a first main material, wherein the M source is a compound containing an element M, and the first main material has a general formula of LiₐNiₓCo_{y}Mn_{z}M_{b}O₂, wherein 1.03 ≤ a ≤ 1.2, 0.001 ≤ b ≤ 0.004, 0.8 ≤ x ≤ 1, 0 ≤ y < 0.12, 0 ≤ z ≤ 0.2, and x + y + z = 1;
(2) mixing the first main material and an A source, and performing a second calcination treatment to prepare a second main material, wherein the A source is a compound containing an element A; and
(3) mixing the second main material and a B source, and performing a third calcination treatment, wherein the B source is a compound containing an element boron,
wherein the element M is selected from one or more of elements of Group VB and Group VIB, and/or the element A is selected from one or more of elements of Group VB and Group VIB.

11. The method according to claim 10, wherein a mass ratio of the first main material to the A source is 1:(0.002-0.01).

12. The method according to claim 10, wherein a mass ratio of the first main material to the A source is 1:(0.003-0.007).

13. The method according to claim 10, wherein a mass ratio of the second main material to the B source is 1:(0.002-0.01).

14. The method according to claim 10, wherein a mass ratio of the second main material to the B source is 1:(0.002-0.005).
